# EUROPÄISCHE PATENTSCHRIFT

(11) **EP 0 645 900 B1**
(45) Veröffentlichungstag und Bekanntmachung des Hinweises auf die Patenterteilung: **07.11.2001**
(21) Anmeldenummer: 94112752.4
(22) Anmeldetag: 16.08.1994
(51) Int. Cl.: H04B 7/10, H04B 14/00

(54) **Verfahren und Einrichtung zur Übertragung von Datensignalen mittels zirkular polarisierter Wellen**
Method and apparatus for data transmission by means of circular polarized waves
Procédé et dispositif pour la transmission de signaux de données au moyen d'ondes polarisées circulairement

(30) Priorität: 24.09.1993 DE 4332476
(43) Veröffentlichungstag der Anmeldung: 29.03.1995
(73) Patentinhaber: ROBERT BOSCH GMBH, 70442 Stuttgart (DE)
(72) Erfinder: Kersken, Ulrich, Dipl.-Ing., D-31141 Hildesheim (DE); Grabow, Wilhelm, Dr.-Ing., D-31139 Hildesheim (DE)

(56) Entgegenhaltungen:
- US-A- 3 311 829
- US-A- 4 198 641
- US-A- 5 172 128
- BLYTHE P T ET AL: "A SHORT-RANGE ROAD TO VEHICLE MICROWAVE COMMUNICATIONS LINK FOR AUTOMATIC DEBITING AND OTHER RTI SERVICES" 1. Januar 1991 , ADVANCED TELEMATICS IN ROAD TRANSPORT. PROCEEDINGS OF THE DRIVE CONFERENCE, 4-6 FEBR. 1991, BRUSSELS, BE, VOL. 1, PAGE(S) 248 - 268 XP000443997 * Seite 252, Zeile 14 - Seite 253, Zeile 4 *
- PATENT ABSTRACTS OF JAPAN vol. 010, no. 302 (E-445), 15. Oktober 1986 & JP 61 117929 A (OKI ELECTRIC IND CO LTD), 5. Juni 1986

## Beschreibung

Die Erfindung betrifft ein Verfahren zur Übertragung von Datensignalen zwischen einer feststehenden Einrichtung und einer Pahrzeugeinrichtung, bei dem die Datensignale in amplitudenmodulierter Form gesendet werden.

Die Erfindung betrifft ferner eine Fahrzeugeinrichtung zum Empfang der übertragenen Datensignale.

Durch die Veröffentlichung Proceedings of the Drive Conference "Advanced Telematics in Road Transport", 1991, Vol. 1, ist im Rahmen des PAMELA-Projekts vorgeschlagen worden, einen Datenaustausch im Mikrowellenbereich zwischen einer Bake am Rande einer Fahrstraße und einem Fahrzeug mit einem aktiven und einem semi-passiven Transponder durchzuführen. Dabei werden Daten von einem Bakengerät zum Sende- und Empfangsteil des Fahrzeuggeräts im sogenannten Downlink mittels amplitudenmodulierter Signale übertragen. Die Datenübertragung vom Fahrzeug zur Bake erfolgt im Uplink-Betrieb nach dem Transponder-Prinzip. Dabei sendet die Bake ein unmoduliertes Trägersignal, das vom Fahrzeuggerät empfangen wird. Dieses empfangene Signal wird mit den auszusendenden Daten moduliert und wieder vom Bakengerät empfangen.

Bei der Signalübertragung zwischen Bake und Fahrzeug breiten sich die Wellen nicht nur auf dem direkten Weg, sondern auch über Reflektionen, beispielsweise an der Fahrbahn, an der Motorhaube oder an anderen Fahrzeugen, aus. Am Empfangsort überlagern sich die einzelnen Wellen, so daß sich in Abhängigkeit von der Phasenlage der einzelnen Wellen eine Vergrößerung oder Verringerung der resultierenden Gesamtfeldstärke gegenüber der Feldstärke einer direkten Welle ergibt. Dieser Effekt ist als "Interferenzschwund" oder "Fading" bekannt. Demgemäß ist bei einer Mehrwegeausbreitung die empfangene Feldstärke stark vom Empfangsort und von der Frequenz abhängig. Diese Feldstärkenschwankung kann sich störend auf die Übertragungssicherheit auswirken.

Die vorliegende Erfindung geht von der Problemstellung aus, einen möglichst zuverlässigen Empfang bei einer nicht vermeidbaren Mehrwegeausbreitung zu erzielen.

Ausgehend von dieser Problemstellung ist ein Verfahren der eingangs erwähnten Art erfindungsgemäß dadurch gekennzeichnet, daß die Aussendung der Datensignale mit zirkular polarisierten Wellen erfolgt, daß in der Fahrzeugeinrichtung Empfangseinrichtungen für unterschiedliche Polarisationen der empfangenen Wellen verwendet werden und daß die Signale der Empfangseinrichtungen separat demoduliert und dann addiert werden.

Der Erfindung liegt die Erkenntnis zugrunde, daß zirkular polarisierte Wellen nach Reflexionen unterschiedliche Polarisations-Mischzustände aufweisen und daß sich die einzeln empfangenen Anteile der unterschiedlichen Polarisationszustände über einen wesentlichen Entfernungsbereich so ergänzen, daß wesentliche Einbrüche des gebildeten Summensignals vermieden werden. Dies gilt insbesondere in einem Abstandsbereich, der für die Datenübertragung zwischen einer Bake und einem an der Bake vorbeifahrenden Kraftfahrzeug benötigt wird.

Zirkular polarisierte elektromagnetische Wellen, die von einer elektrisch gut leitenden Oberfläche reflektiert werden, ändern die Rotationsrichtung des Feldstärkevektors (Kreuzpolarisation). Ist das reflektierende Material elektrisch nicht gut leitend oder isolierend, werden aus den zirkular polarisierten Wellen nach der Reflexion elliptisch polarisierte Wellen. Die Elliptizität der reflektierten Welle hängt von den Materialeigenschaften Dielektrizitätszahl und Permeabilität ab.

Erfindungsgemäß können Empfangsanlagen für zirkular ko- und kreuzpolarisierte Wellen, aber auch für linear polarisierte Wellen, die orthogonal zueinander stehen, verwendet werden.

Von besonderem Vorteil ist es, wenn erfindungsgemäß die unterschiedlich polarisierten Wellen mit einem einzigen Antennenelement empfangen werden.

Ausgehend von der obenerwähnten Problemstellung ist ferner eine Fahrzeugeinrichtung zum Empfang von von einer feststehenden Einrichtung ausgesandten, mit Daten amplitudenmodulierten, zirkular polarisierten Wellen erfindungsgemäß gekennzeichnet durch eine Empfangseinrichtung für unterschiedliche Polarisationen der empfangenen Wellen, durch an die Empfangseinrichtung angeschlossene Demodulatoren für die verschiedenen Polarisationen und durch eine mit den Ausgängen der Demodulatoren verbundene Summationsstufe.

Diese erfindungsgemäße Fahrzeugeinrichtung läßt sich auf kleinstem Raum realisieren, wenn die Empfangseinrichtung ein Streifenleiter-Antennenelement zum Empfang von Wellen mit verschiedenen Polarisationen aufweist, von dem die unterschiedlich polarisierten Empfangssignale räumlich getrennt abnehmbar sind.

Die räumlich getrennte Abnahme unterschiedlich polarisierter Empfangssignale ist direkt für linear polarisierte Wellen möglich. Für die räumliche Trennung von zirkular ko- und kreuzpolarisierten Wellen kann an das Streifenleiter-Antennenelement ein 90°-Hybrid angeschlossen sein.

Die Erfindung wird im folgenden anhand von in der Zeichnung dargestellten Ausführungsbeispielen näher erläutert. Es zeigen:
- Figur 1 -: eine schematische Darstellung der Datenkommunikation zwischen einer feststehenden Bake und einem Fahrzeug
- Figur 2 -: zwei Antennenelemente für zirkulare Polarisation mit angeschlossenem 90°-Hybrid zur Trennung von kreuzpolarisierten und kopolarisierten Wellen
- Figur 3 -: ein Blockschaltbild für eine Empfangseinrichtung im Fahrzeug
- Figur 4 -: Signal-Empfangspegel für zirkular kopolarisierte und kreuzpolarisierte Wellen in Abhängigkeit vom Abstand vom Sendeort
- Figur 5 -: ein Vergleich der Signalpegel des addierten Signals mit dem kopolarisierten Signal
- Figur 6 -: Antennenelemente für den Empfang linear polarisierter Wellenanteile
- Figur 7 -: Signalpegel für empfangene horizontal und vertikal polarisierte Wellenanteile
- Figur 8 -: ein Vergleich der Signalpegel des addierten Signals mit dem des horizontal polarisierten Signals.

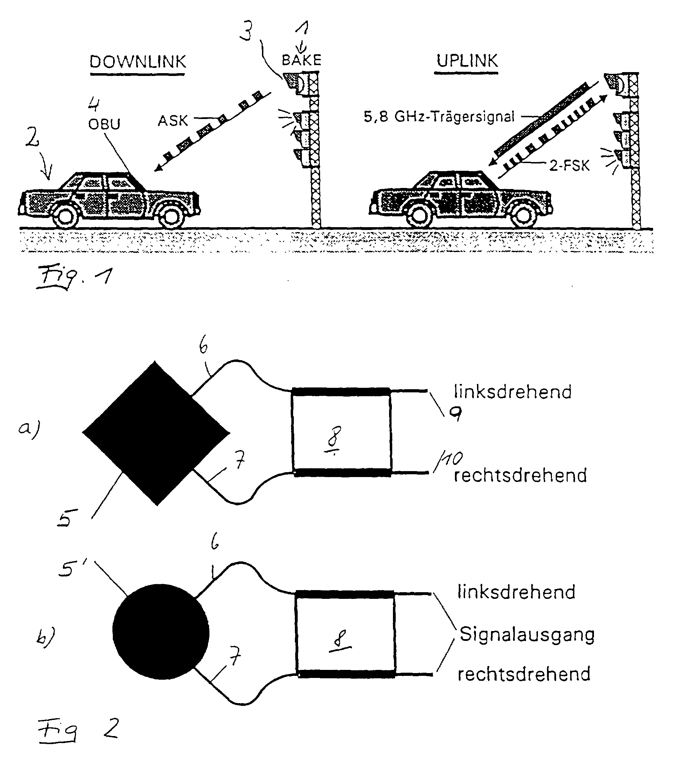

Figur 1 verdeutlicht die an sich bekannte Kommunikation zwischen einer Bake 1 und einem Fahrzeug 2.

In einem ersten Betriebszustand, der Downlink-Phase überträgt eine Sende-/Empfangseinrichtung 3 der Bake 1 ein amplitudenmoduliertes Signal (ASK) auf ein Fahrzeuggerät 4 (OBU).

Das Antwortsignal vom Fahrzeug 2 wird in der Uplink-Phase nach dem semi-passiven Transponderprinzip erzeugt, in dem das Fahrzeuggerät 4 aus einem von dem Sende-/Empfangsgerät 3 ausgesandtes unmoduliertes Trägersignal phasen- oder frequenzmoduliert zurücksendet.

Für die vorliegende Erfindung ist ausschließlich die Datenübertragung in der Downlink-Phase von Bedeutung.

Erfindungsgemäß wird von dem Sende-/Empfangsgerät 3 der Bake 1 das amplitudenmodulierte Signal (ASK) als zirkular polarisiertes Signal ausgesandt.

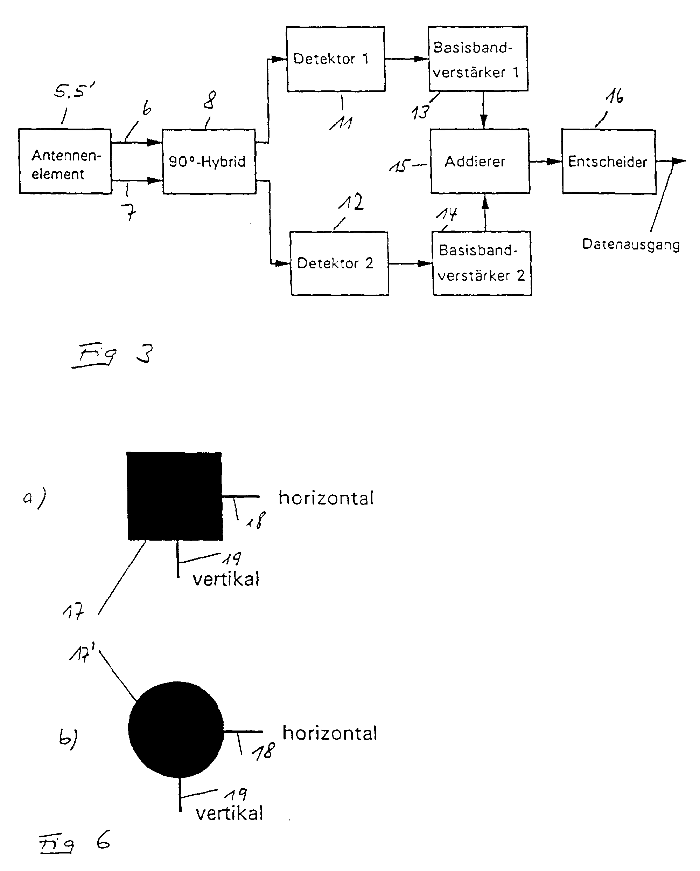

Figur 2 zeigt zwei Antennenelemente 5, 5', die in Streifenleitertechnik ausgeführt sind und daher auf kleinstem Raum für das Fahrzeuggerät 4 realisierbar sind. Das in Figur 2 a dargestellte Antennenelement 5 weist eine quadratische Kontur, das in Figur 2 b dargestellte Antennenelement 5' eine kreisrunde Kontur auf.

Von beiden Antennenelementen 5, 5' werden zwei Signale über zwei Leitungen 6, 7, die um 90° winkelversetzt an das Antennenelement 5, 5' angeschlossen sind, abgenommen. Die Leitungen 6, 7 sind mit einem 90°-Hybrid 8 verbunden, an dessen beiden Ausgängen 9, 10 das Empfangssignal einer linksdrehenden und das einer rechtsdrehenden zirkular polarisierten Welle ansteht.

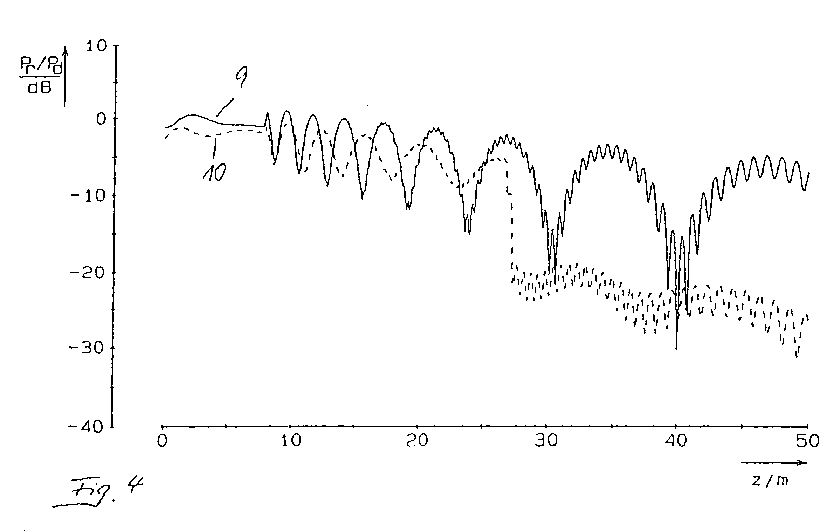

Figur 3 verdeutlicht, daß die beiden unterschiedlich polarisierten Signale 9, 10 auf je einen Demodulator 11, 12 gelangen, der zur Amplitudendemodulation als einfacher Detektor in Form einer Diode ausgebildet sein kann. An die Detektoren 11, 12 ist je ein Basisbandverstärker 13, 14 angeschlossen. Deren Ausgangssignale gelangen auf eine Summationsstufe 15. An dessen Ausgang ist das Datensignal über eine Torstufe 16 abnehmbar, die nach Art einer Schwellwertstufe das analoge Signal in ein digitales Signal wandelt.

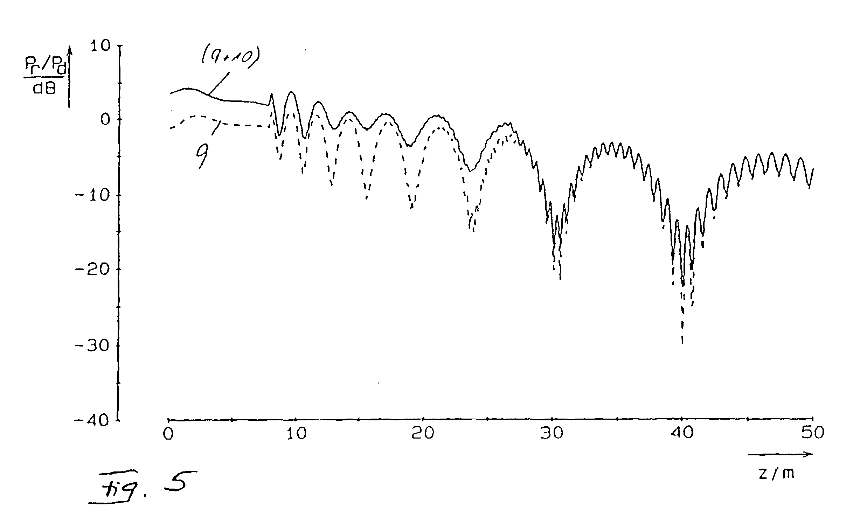

Figur 4 zeigt die normierten Signalpegel, und zwar in durchgezogener Linie für die kopolaren Wellen und in gestrichelter Linie für kreuzpolare Wellen. Es zeigt sich, daß ab einer Entfernung von etwa 8 m starke Signaleinbrüche auftreten, die die Übertragungssicherheit erheblich beeinträchtigen können.

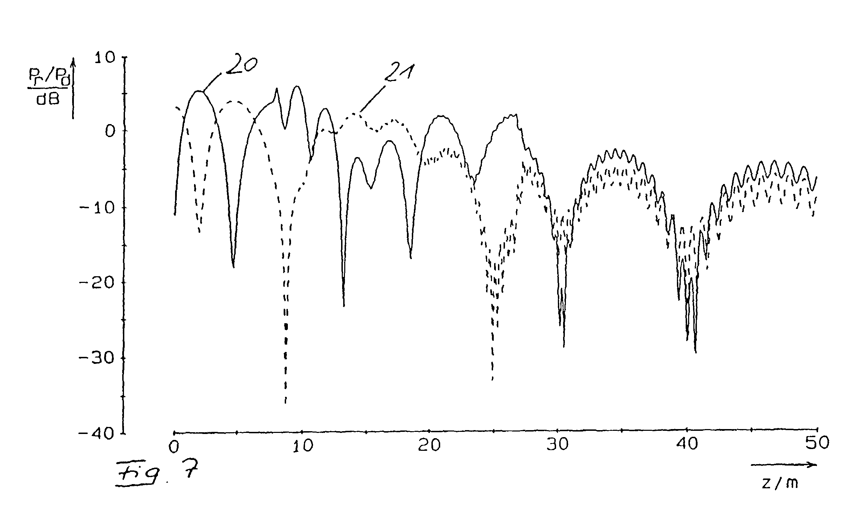

Figur 5 zeigt demgegenüber in durchgezogener Linie das am Ausgang der Summationsstufe 15 anstehende summierte Signal 9 + 10 und im Vergleich dazu gestrichelt den Intensitätsverlauf für die kopolarisierten Wellen 9. Es ist deutlich erkennbar, daß bis zu einer Entfernung von knapp 30 m keine so erheblichen Einbrüche auftreten, wie sie in der Intensität der kopolarisierten Wellen oder der kreuzpolarisierten Wellen zu beobachten sind.

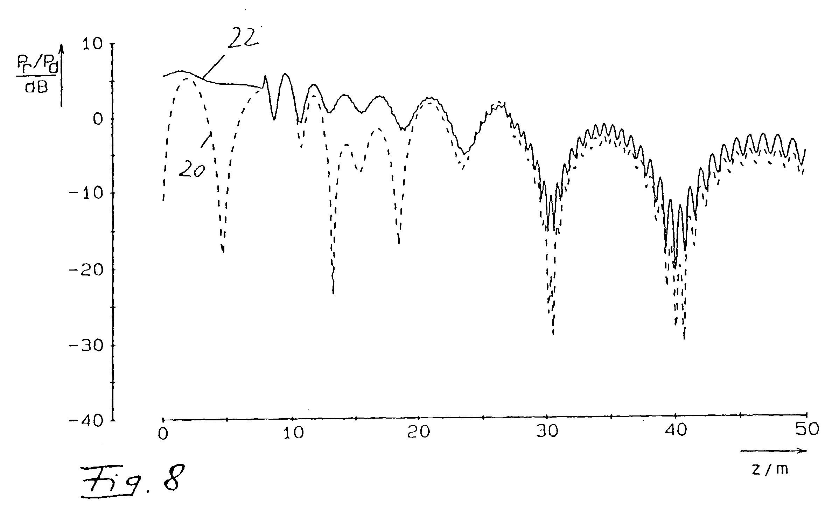

Figur 6 zeigt Antennenelemente 17, 17', die wie die Antennenelemente 5, 5' als Streifenleiterelemente ausgeführt sind. An den beiden, um 90° zueinander winkelversetzten Ausgängen 18, 19 sind linear polarisierte horizontale bzw. vertikale Signalanteile abnehmbar. Der Einsatz eines 90°-Hybrids kann hierbei entfallen. Aufbau und Wirkungsweise der Antennenelemente 5, 5' und 17, 17' und der 90°-Hybride sind bekannt und beispielsweise in James, Hall "Handbook of Microstrip Antennas" Band 1, Exitor 1989, Kapitel 13.1 sowie in Bahl, Bhartia "Microwave Solids State Circuit Design", 1988, Kapitel 5.2.1 und in Bahl, Bhartia "Microstrip Antennas", Ottawa 1980, Kapitel 2.5.2 beschrieben.

Die Figuren 7 und 8 zeigen Pegelverläufe analog den Pegelverläufen in den Figuren 4 und 5.

In Figur 7 zeigt die durchgezogene Linie den Signalpegel 20 für die horizontale lineare Polarisation und die gestrichelte Linie 21 den Signalpegel für die vertikale lineare Polarisation.

Figur 8 zeigt im Vergleich in durchgezogener Linie den Signalpegel 22 für das Summensignal und in gestrichelter Darstellung den Signalpegel 20 für die horizontale lineare Polarisation.

Das Summensignal wird mit einer Schaltungsanordnung erzeugt, die der Schaltungsanordnung aus Figur 3 entspricht, wobei lediglich das 90°-Hybrid 8 fortgelassen worden ist. Der Kurve des Signalpegels 22 für das Summensignal ist zu entnehmen, daß ein erster starker Einbruch erst in einem Abstand von über 25 m auftritt. Bis zu einem Abstand von 20 m vom Sender liegt eine relative Konstanz des Signalpegels vor.

## Patentansprüche

1. Verfahren zur Übertragung von Datensignalen zwischen einer feststehenden Einrichtung (3) und einer Fahrzeugeinrichtung (4), bei dem die Datensignale in amplitudenmodulierter Form gesendet werden, **dadurch gekennzeichnet, daß** die Aussendung der Datensignale mit zirkular polarisierten Wellen erfolgt, daß in der Fahrzeugeinrichtung (4) Empfangseinrichtungen für unterschiedliche Polarisationen der empfangenen Wellen verwendet werden und daß die Signale der Empfangseinrichtungen separat demoduliert und anschließend addiert werden.

2. Verfahren nach Anspruch 1, **gekennzeichnet durch** die Verwendung von Empfangsanlagen (5 bis 8) für zirkulare Polarisation sowohl für ko- als auch für kreuzpolarisierte Wellen.

3. Verfahren nach Anspruch 1 oder 2, **gekennzeichnet durch** die Verwendung von Empfangsanlagen (17 bis 19) für orthogonal zueinander stehende linear polarisierte Wellen.

4. Verfahren nach einem der Ansprüche 1 bis 3, **dadurch gekennzeichnet, daß** die unterschiedlich polarisierten Wellen mit einem einzigen Antennenelement (5, 5', 17, 17') empfangen werden.

5. Fahrzeugeinrichtung zum Empfang von von einer feststehenden Einrichtung (3) ausgesandten, mit Daten amplitudenmodulierten, zirkular polarisierten Wellen, **gekennzeichnet durch** eine Empfangseinrichtung (5 bis 8; 17 bis 19) für unterschiedliche Polarisationen der empfangenen Wellen, **durch** an die Empfangseinrichtungen angeschlossene Demodulatoren (11, 12) für die verschiedenen Polarisationen und **durch** eine mit den Ausgängen der Demodulatoren (11, 12) verbundene Summationsstufe (15).

6. Fahrzeugeinrichtung nach Anspruch 5, **dadurch gekennzeichnet, daß** die Empfangseinrichtung (5 bis 8; 17 bis 19) ein Streifenleiter-Antennenelement (5, 5', 17, 17') zum Empfang von Wellen mit verschiedenen Polarisationen aufweist, von dem die unterschiedlich polarisierten Empfangssignale räumlich getrennt abnehmbar sind.

7. Fahrzeugeinrichtung nach Anspruch 6, **dadurch gekennzeichnet, daß** an das Streifenleiter-Antennenelement (5, 5', 17, 17') ein 90°-Hybrid (8) angeschlossen ist.

## Claims

1. Method for transmitting data signals between a fixed device (3) and a vehicle device (4), in which the data signals are transmitted in amplitude-modulated form, **characterized in that** the data signals are transmitted with circular-polarized waves, **in that** receivers for different polarizations of the received waves are used in the vehicle device (4), and **in that** the signals of the receivers are demodulated separately and subsequently added.

2. Method according to Claim 1, **characterized by** the use of receiving systems (5 to 8) for circular polarization both for copolarized and for cross-polarized waves.

3. Method according to Claim 1 or 2, **characterized by** the use of receiving systems (17 to 19) for linearly polarized waves which are orthogonal to one another.

4. Method according to one of Claims 1 to 3, **characterized in that** the differently polarized waves are received with a single antenna element (5, 5', 17, 17').

5. Vehicle device for receiving circular-polarized waves which are transmitted by a fixed device (3) and amplitude-modulated with data, **characterized by** a receiver (5 to 8; 17 to 19) for different polarizations of the received waves, by demodulators (11, 12), connected to the receivers, for the different polarizations, and by a summing stage (15) which is connected to the outputs of the demodulators (11, 12).

6. Vehicle device according to Claim 5, **characterized in that** the receiver (5 to 8; 17 to 19) has a strip-conductor antenna element (5, 5', 17, 17') for receiving waves with different polarizations, from which strip-conductor antenna element (5, 5', 17, 17') the differently polarized received signals can be tapped in a spatially separated fashion.

7. Vehicle device according to Claim 6, **characterized in that** a 90° hybrid (8) is connected to the strip-conductor antenna element (5, 5', 17, 17').

## Revendications

1. Procédé de transmission de signaux de données entre une installation fixe (3) et un véhicule (4), selon lequel les signaux de données sont émis en modulation d'amplitude,
**caractérisé en ce que**
l'émission des signaux de données se fait par des ondes à polarisation circulaire, l'installation (4) du véhicule comprenant des installations de réception pour des polarisations différentes des ondes reçues, et
les signaux de l'installation de réception sont démodulés séparément pour être ensuite additionnés.

2. Procédé selon la revendication 1,
**caractérisé par**
l'utilisation d'installations de réception (5-8) pour des ondes à polarisation circulaire ainsi que pour des ondes de même polarisation et à polarisation croisée.

3. Procédé selon les revendications 1 ou 2,
**caractérisé par**
des installations de réception (17-19) pour des ondes à polarisation linéaire, orthogonales.

4. Procédé selon l'une quelconque des revendications 1 à 3,
**caractérisé en ce que**
les ondes de polarisations différentes sont reçues par un seul élément d'antenne (5, 5', 17, 17').

5. Installation de véhicule pour recevoir des ondes à polarisation circulaire avec des données modulées en amplitude, ondes émises par une installation fixe (3),
**caractérisée par**
une installation de réception (5-8; 17-19) pour des polarisations différentes des ondes reçues,
des démodulateurs (11-12) reliés aux installations de réception pour les différentes polarisations, et
un étage de sommation (15) relié aux sorties des démodulateurs (11, 12)

6. Installation de véhicule selon la revendication 5,
**caractérisée en ce que**
l'installation de réception (5-8; 17-19) est un élément d'antenne à conducteurs en ruban (5, 5'; 17, 17') pour recevoir des ondes de polarisations différentes, et ces éléments d'antenne fournissent les signaux de réception de polarisations différentes en des points séparés dans l'espace.

7. Installation de véhicule selon la revendication 6,
**caractérisée par**
un circuit hybride à 90° (8) relié à l'élément d'antenne à conducteurs en ruban (5, 5' ; 17, 17').
